# EUROPÄISCHE PATENTSCHRIFT

(11) **EP 2 890 915 B1**
(45) Veröffentlichungstag und Bekanntmachung des Hinweises auf die Patenterteilung: **04.01.2017**
(21) Anmeldenummer: 13753162.0
(22) Anmeldetag: 21.08.2013
(51) Int. Cl.: B23B 27/00, B23B 29/02, B23B 29/034, F16F 15/36, B23Q 11/00

(54) **SCHWINGUNGSGEDÄMPFTES WERKZEUG**
VIBRATION-DAMPED TOOL
OUTIL AMORTI EN VIBRATIONS

(30) Priorität: 31.08.2012 DE 102012108098
(43) Veröffentlichungstag der Anmeldung: 08.07.2015
(73) Patentinhaber: Sandvik Intellectual Property AB, 811 81 Sandviken (SE)
(72) Erfinder: FRANK, Peter, 98593 Floh-Seligenthal (DE)
(74) Vertreter: WSL Patentanwälte Partnerschaft mbB
(86) Internationale Anmeldenummer: PCT/EP2013/067354
(87) Internationale Veröffentlichungsnummer: WO 2014/033020

(56) Entgegenhaltungen:
- EP-A1- 1 557 819
- EP-A1- 2 014 869
- WO-A2-2009/129091
- US-A1- 2003 147 712
- US-A1- 2012 024 646
- US-A1- 2012 207 560

## Beschreibung

Die vorliegende Erfindung betrifft ein Werkzeug zur spanenden Bearbeitung von Werkstücken mit einem Werkzeugkörper.

Solche Werkzeuge sind seit langem bekannt. In der Regel weist der Werkzeugkörper ein Antriebsteil, das für die Verbindung mit einem Antrieb vorgesehen ist, und ein Bearbeitungsteil, das mindestens ein Schneidelement zur Bearbeitung eines Werkstoffs hat, auf. Ein Beispiel eines solchen Werkzeuges ist in der WO 2004/087354 gezeigt. Dieses Ausbohrwerkzeug weist ein Bearbeitungsteil auf, das eine Reihe von Aufnahmen für Schneidplatten besitzt, die zur Bearbeitung eines Werkstückes vorgesehen sind. Weiterhin weist das Ausbohrwerkzeug an seiner den Aufnahmen für Schneideinsätze abgewandten Seite ein Antriebsteil in Form eines Schaftes mit einem entsprechend ausgebildeten Kupplungselement auf.

Die Werkzeugkörper sind meistens aus einem metallischen Werkstoff, zum Beispiel Stahl hergestellt und entsprechend massiv. Grundsätzlich ist es wünschenswert, diese Werkzeugkörper mit möglichst wenig Material herzustellen, da dies die Kosten zur Herstellung des Werkzeuges reduziert und den Energieverbrauch des Werkzeuges verringert.

Andererseits werden auf diese Werkzeuge bei der spanenden Bearbeitung nicht unerhebliche Kräfte ausgeübt, die zu Vibrationen des Werkzeugkörpers führen können, was wiederum die Schneidqualität des Werkzeuges reduziert.

Dies beschränkt häufig die Länge der Werkzeugkörper in Längsrichtung, d. h. von Antriebsteil zu Bearbeitungsteil, da je länger der Werkzeugkörper ist, umso stärkere Vibrationen auftreten können.

Vereinzelt ist bereits versucht worden, einen passiven Schwingungsdämpfer in ein Werkzeug zu integrieren, der innerhalb des Werkzeuges eine gedämpfte Bewegung durchführen kann. Solche passiven Schwingungsdämpfer haben jedoch eine beträchtliche Ausdehnung und vergrößern in der Regel das Gewicht des Werkzeuges. Ein höheres Gewicht des Werkzeuges führt jedoch wiederum aufgrund der Verringerung der Eigenfrequenzen des Werkzeuges zu einer erhöhten Vibration.

Bei der Herstellung dieser Werkzeuge kommt daher häufig mehr Material zum Einsatz als zur Aufnahme der Kräfte während der Bearbeitung notwendig ist. Diese zusätzliche Masse dient lediglich dazu, Vibrationen besser dämpfen zu können.

Ausgehend von dem beschriebenen Stand der Technik ist es daher Aufgabe der vorliegenden Erfindung, ein Werkzeug zur Verfügung zu stellen, welches im Betrieb nur sehr geringe Vibrationen zeigt und/oder dessen Länge in Längsrichtung größer als die herkömmlicher Werkzeuge sein kann.

Ein Beispiel eines solchen Werkzeugs ist in der US2003/0147712 A1 gezeigt.

Erfindungsgemäß wird diese Aufgabe dadurch gelöst, dass der Werkzeugkörper einen Hohlraum aufweist, in dem eine Vielzahl von hohlen Strukturelementen mit einer äußeren geschlossenen Schale, innerhalb der zumindest ein fester Partikel oder ein Hohlkörper frei beweglich angeordnet ist, aufgenommen sind. Solche Strukturelemente sind beispielsweise aus der DE 10 2004 003 507 B4 bekannt, deren Inhalt bezüglich des Aufbaus der hohlen Strukturelemente durch Bezugnahme aufgenommen wird. Alle darin beschriebenen hohlen Strukturelemente sind prinzipiell für die Anordnung im Hohlraum des Werkzeugkörpers geeignet.

Diese hohlen Strukturelemente werden im Allgemeinen zur Schallabsorption verwendet und als Zwischenschicht von zum Beispiel Raumdecken eingefüllt, um Trittschall zu reduzieren.

Es hat sich jedoch gezeigt, dass die innerhalb der hohlen Strukturelemente aufgenommenen Partikel oder Hohlkörper sehr gute schwingungsdämpfende Eigenschaften haben. Insbesondere bei abrupt auftretenden Stößen, verbleiben die frei beweglichen Partikel oder Hohlkörper aufgrund ihrer Trägheit zunächst an ihrer Position und sorgen dadurch für eine Stoßdämpfung. Sollte der Werkzeugkörper schwingen, so werden auch die frei beweglichen Partikel oder Hohlkörper zu einer Schwingung angeregt. Da jedoch die Schwingungseigenfrequenzen der frei beweglichen Partikel oder Hohlkörper sich deutlich von der Eigenfrequenz des Werkzeuges unterscheiden, führt dies zu einer effektiven Dämpfung der Schwingung.

Erfindungsgemäß wir nun in den Werkzeugkörper ein Hohlraum eingebracht, was zu einer Materialeinsparung und damit zu einer Gewichtsreduzierung führt. Allein durch die Gewichtsreduzierung werden die Eigenfrequenzen des Werkzeuges erhöht und daher die Vibrationsanfälligkeit verringert.

In diesem Hohlraum werden dann eine Vielzahl der genannten hohlen Strukturelemente angeordnet. Der Hohlraum wird dann verschlossen oder die Strukturelemente im Hohlraum befestigt. Die Strukturelemente sind nämlich nicht nur in der Lage, Schall zu absorbieren, sie führen auch zu einer merklichen Reduktion von Vibrationen. Durch die erfindungsgemäße Maßnahme kann daher bei den bekannten Werkzeugen sowohl Material eingespart werden, als auch die Werkzeugvibration reduziert werden durch Einbringen eines Hohlraums und Ausfüllen des Hohlraums mit den genannten hohlen Strukturelementen. Die hohlen Strukturelemente selbst sind sehr leicht.

In einer bevorzugten Ausführungsform ist das Werkzeug ein Bohr- oder Fräswerkzeug mit einer Rotationsachse und weist einen Schaftabschnitt zur Verbindung des Werkzeuges mit einem Antrieb und einen Werkzeugabschnitt, der eine Schneidkante zur spanenden Bearbeitung eines Werkstücks aufweist oder an dem ein Schneideinsatz mit einer solchen Schneidkante befestigt werden kann, auf.

In einer weiteren bevorzugten Ausführungsform ist der Hohlraum in einer Schnittebene senkrecht zur Rotationsachse mit einer 2- oder mehrzählige Rotationssymmetrie ausgestaltet. Alternativ können auch mehrere Hohlräume vorgesehen sein, in denen jeweils eine Vielzahl von hohlen Strukturelementen mit einer äußeren geschlossenen Schale, innerhalb der zumindest ein fester Partikel oder ein Hohlkörper frei beweglich angeordnet ist, aufgenommen sind, die derart angeordnet sind, dass sie in einer Schnittebene senkrecht zur Rotationsachse mit einer 2- oder mehrzähligen Rotationssymmetrie ausgestaltet sind.

Dabei wird unter einer 2-zähligen Rotationssymmetrie verstanden, dass eine Drehung um 180° um die Rotationsachse den Hohlraum in sich selbst überführt. Bei einer n-zähligen Rotationssymmetrie wird der Hohlraum bei einer Drehung um 360°/n um die Rotationsachse wieder in sich selbst überführt.

Diese Anordnung hat den Vorteil, dass das Werkzeug durch das Vorhandensein des Hohlraums keine zusätzliche Unwucht erfährt, die dann wiederum durch entsprechende Maßnahmen ausgeglichen werden müsste.

In einer bevorzugten Ausführungsform ist der Hohlraum im Wesentlichen ringförmig ausgebildet. Dabei ist vorzugsweise die Ringebene senkrecht zur Rotationsachse des Werkzeuges angeordnet, wobei die Rotationsachse durch den Ringmittelpunkt verläuft.

In einer alternativen Ausführungsform ist das Werkzeug ein sich nicht drehendes Werkzeug, z.B. ein Werkzeug für das Drehen oder Abstechen.

In einer weiteren bevorzugen Ausführungsform ist das Werkzeug zweiteilig aufgebaut, wobei die beiden Werkzeugteile den Hohlraum begrenzen. Bei der Herstellung bzw. beim Zusammensetzen des Werkzeugs wird daher zunächst der Hohlraum, der als offene Bohrung oder Vertiefung in dem einen Werkzeugteil ausgebildet ist, mit den hohlen Strukturelementen befüllt. In einem weiteren Schritt wird das zweite Werkzeugteil mit dem ersten Werkzeugteil verbunden, wobei die beiden Werkzeugteile derart ausgebildet sind, dass das zweite Werkzeugteil die offene Bohrung bzw. die offene Ausnehmung verschließt, so dass sich ein geschlossener Hohlraum bildet, in dem die Vielzahl von hohlen Strukturelementen angeordnet ist.

In einer bevorzugten Ausführungsform können die beiden Werkzeugteile über eine Schraube miteinander verbunden sein, wobei im Falle eines sich drehenden Werkzeuges die Schraube vorzugsweise auf der Rotationsachse liegt und die Schraubenaußenfläche zumindest abschnittsweise den Hohlraum begrenzt. Mit anderen Worten verläuft der Hohlraum um die Schraubenaußenfläche und kann vorzugsweise ringförmig bzw. hohlzylinderförmig ausgebildet sein.

Die hohlen Strukturelemente sollten den Hohlraum im Wesentlichen vollständig ausfüllen, um während des Betriebes des Werkzeuges eine Bewegung der Strukturelemente im Hohlraum und die damit verbundene Unwucht des Werkzeuges zu verhindern.

Alternativ oder in Kombination dazu können die hohlen Strukturelemente innerhalb des Hohlraums durch Sintern, Verkleben oder durch eine aushärtende Substanz, wie zum Beispiel Gießharz, miteinander verbunden sein. Durch diese Maßnahme ist es nun nicht unbedingt erforderlich, dass der Hohlraum vollständig mit den hohlen Strukturelementen ausgefüllt ist, da während des Betriebes die hohlen Strukturelemente nicht mehr einzeln Bewegung durchführen können. Zudem hat die Verbindung der Strukturelemente, insbesondere wenn die Strukturelemente mit den Hohlraumwänden verbunden werden, den zusätzlichen Vorteil, dass die Strukturelemente Kräfte aufnehmen können, wodurch die mechanischen Anforderungen an den Werkzeugkörper bzw. die Kräfte, die dieser aufnehmen muss, noch weiter reduziert werden, so dass noch mehr Material eingespart werden kann.

In einer weiteren bevorzugten Ausführungsform ist vorgesehen, dass der Hohlraum achsnah, d. h. innerhalb eines Bereiches der sich von der Rotationsachse radial um die Länge a nach außen erstreckt, wobei die Länge a < 0,8 *r, vorzugsweise < 0,65 *r, und am besten < 0,5*r ist, wobei r der halbe Werkzeugdurchmesser ist, angeordnet ist.

In einer weiteren bevorzugten Ausführungsform ist der Hohlraum näher am werkzeugabschnittseitigen Ende als am schaftabschnittseitigen Ende des Werkzeuges angeordnet.

In einer weiteren bevorzugten Ausführungsform ist vorgesehen, dass der Hohlraum entlang der Rotationsachse von dem Antriebsabschnitt in Richtung des Werkzeugabschnittes gestuft oder konisch ausgebildet ist, so dass die Querschnittsfläche senkrecht zur Rotationsachse des Hohlraumes an einer ersten axialen Position kleiner ist als an einer zweiten axialen Position, wobei die erste axiale Position näher am Schaftabschnitt angeordnet ist, als die zweite Position.

Alternativ wäre es auch möglich, die hohlen Strukturkörper in einem separaten Gefäß anzuordnen und dieses Gefäß in den Hohlraum einzubringen.

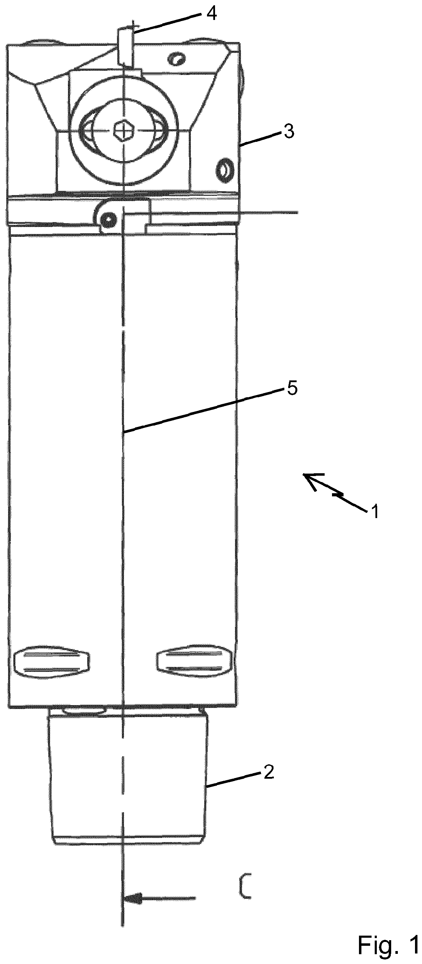

Weitere Vorteile, Merkmale und Anwendungsmöglichkeiten der vorliegenden Erfindung werden deutlich anhand der folgenden Beschreibung einer bevorzugten Ausführungsform sowie der zugehörigen Figuren. Es zeigen
- Figur 1: eine Seitenansicht auf ein erste Ausführungsform eines erfindungsgemäßes Werkzeuges,
- Figur 2: eine Schnittansicht entlang der Linie C-C in Figur 1,
- Figur 3: eine Schnittansicht einer zweiten Ausführungsform der Erfindung und
- Figur 4: eine Schnittansicht einer dritten Ausführungsform der Erfindung.

Das erfindungsgemäße Werkzeug 1 weist einen Schaftabschnitt 2 auf, der an einen Antrieb angeschlossen werden kann. Das Werkzeug 1 weist zudem einen Werkzeugabschnitt 3 auf, an den eine Schneidplatte 4 mit einer Schneidkante angeordnet ist. Das Werkzeug stellt einen Ausbohrkopf dar, der sich bei der Bearbeitung um die Rotationsachse 5 dreht.

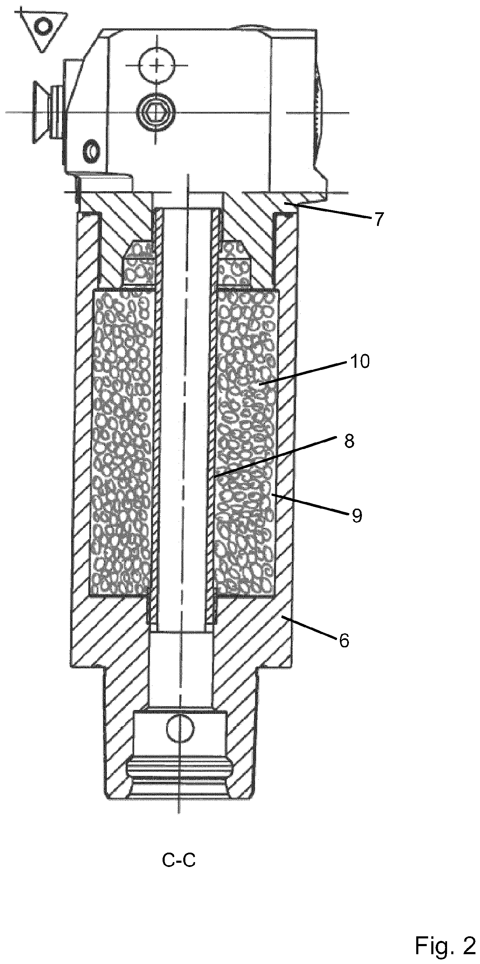

Wie insbesondere der Schnittansicht der Figur 2 zu entnehmen ist, besteht das Werkzeug 1 aus zwei Teilen, nämlich einem Unterteil 6 und einem Oberteil 7. Das Unterteil 6 und das Oberteil 7 sind über eine Hohlschraube 8, welche sowohl in das Unterteil 6 als auch in das Oberteil 7 eingreift, miteinander verbunden. In dem Unterteil 6 ist eine Vertiefung bzw. ein Hohlraum 9 vorgesehen, der die Hohlschraube 8 umgebend angeordnet ist. Dieser Hohlraum 9 des Unterteils 6 wird durch das Oberteil 7 verschlossen, so dass bei aufgesetztem Oberteil sich eine geschlossene Kavität ergibt. In diesen Hohlraum 9 sind, wie in der Zeichnung schematisch angedeutet, eine Vielzahl von hohlen Strukturelementen 10 angeordnet, die entweder als lose Schüttung, wobei in diesem Fall der Hohlraum 9 möglichst vollständig ausgefüllt sein sollte, oder eingebettet in einer Klebstoff- oder Harzstruktur eingebracht sind. Werden die hohlen Strukturelemente 10 miteinander und am besten auch mit der Hohlschraube 8 und dem Unterteil 6 verbunden, zum Beispiel verklebt, so erfüllen die hohlen Strukturelemente nicht nur eine schwingungsabsorbierende Funktion, sondern können zugleich auch Kräfte aufnehmen, so dass die Außenwände des Unterteils 6 mit geringerer Wandstärke ausgebildet werden können, was eine weitere Materialersparnis darstellt. Bei Bedarf kann über die Hohlschraube 8 Kühl- und/oder Schmiermittel zugeführt werden.

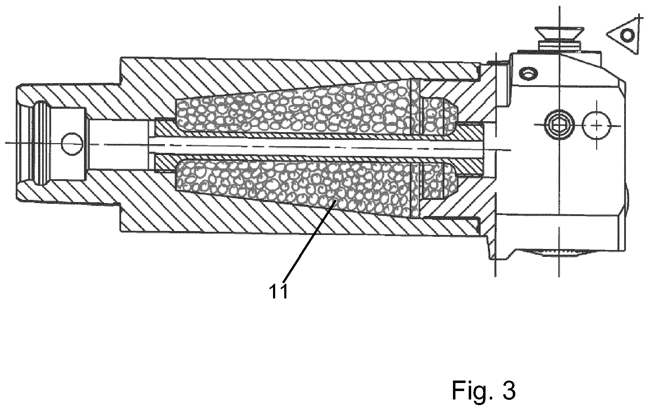

Figur 3 zeigt eine entsprechende Schnittansicht einer zweiten Ausführungsform der Erfindung. Der Aufbau ist sehr ähnlich zu der ersten Ausführungsform. Allerdings ist hier der Hohlraum (11) konisch ausgebildet, d.h. er erweitert sich in Richtung des Werkzeugabschnittes. Dadurch kann in der Nähe des Schaftabschnittes eine hohe Steifigkeit erzielt werden und in der Nähe des Werkzeugabschnittes eine hohe Vibrationsdämpfung. Man erkennt des weiteren, dass die Hohlschraube im Bereich des Hohlraums einen geringeren Außendurchmesser hat, so dass sich der Hohlraum weiter in Richtung der Rotationsachse erstreckt.

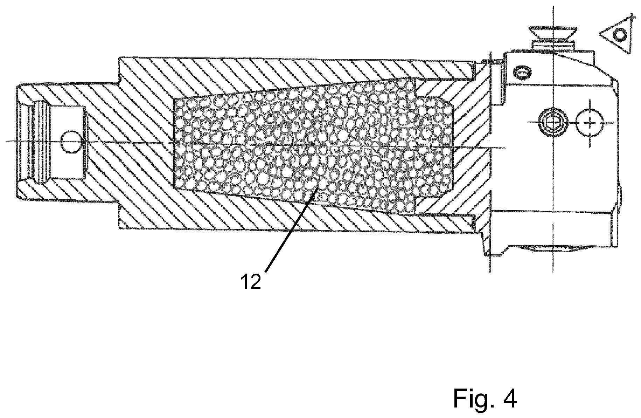

Figur 4 zeigt eine entsprechende Schnittansicht einer dritten Ausführungsform der Erfindung. Diese Ausführungsform unterscheidet sich von der zweiten Ausführungsform dadurch, dass die beiden Werkzeugteile nicht durch die Hohlschraube miteinander verbunden sind, so dass der Hohlraum 12 hier auch nicht ringförmig ausgebildet ist.

Durch die erfindungsgemäße Maßnahme können die Werkzeuge zur spanenden Bearbeitung bei gleichbleibendem Durchmesser deutlich länger in Richtung der Rotationsachse ausgeführt werden, ohne dass es bei gleichbleibenden Schnittkräften zu einer größeren Vibration kommt. Zudem kann das Gewicht des Werkzeuges deutlich reduziert werden.

### Bezugszeichenliste

- 1: Werkzeug
- 2: Schaftabschnitt
- 3: Werkzeugabschnitt
- 4: Schneidplatte
- 5: Rotationsachse
- 6: Unterteil
- 7: Oberteil
- 8: Hohlschraube
- 9: Hohlraum
- 10: Strukturelemente
- 11: Hohlraum
- 12: Hohlraum

## Patentansprüche

1. Werkzeug zur spanenden Bearbeitung von Werkstücken mit einem Werkzeugkörper, **dadurch gekennzeichnet, dass** der Werkzeugkörper einen Hohlraum aufweist, in dem eine Vielzahl von hohlen Strukturelementen mit einer äußeren geschlossenen Schale, innerhalb der zumindest ein fester Partikel oder ein Hohlkörper frei beweglich angeordnet ist, aufgenommen sind.

2. Werkzeug nach Anspruch 1, **dadurch gekennzeichnet, dass** das Werkzeug ein Bohr- oder Fräswerkzeug mit einer Rotationsachse ist und einen Schaftabschnitt zur Verbindung des Werkzeuges mit einem Antrieb und einen Werkzeugabschnitt der eine Schneidkante zur spanenden Bearbeitung eines Werkstückes aufweist oder an dem ein Schneideinsatz mit einer solchen Schneidkante befestigt werden kann.

3. Werkzeug nach Anspruch 2, **dadurch gekennzeichnet, dass** der Hohlraum in einer Schnittebene senkrecht zur Rotationsachse eine 2- oder mehrzählige Rotationssymmetrie aufweist, oder dass mehrere Hohlräume, in denen eine Vielzahl von hohlen Strukturelementen mit einer äußeren geschlossenen Schale, innerhalb der zumindest ein fester Partikel oder ein Hohlkörper frei beweglich angeordnet ist, aufgenommen sind, in einer Schnittebene senkrecht zur Rotationsachse eine 2- oder mehrzählige Rotationssymmetrie aufweisen.

4. Werkzeug nach Anspruch 2 oder 3, **dadurch gekennzeichnet, dass** der Hohlraum im wesentlichen ringförmig ausgebildet ist.

5. Werkzeug nach einem der Ansprüche 1 bis 5, **dadurch gekennzeichnet, dass** das Werkzeug zweiteilig aufgebaut ist, wobei die beiden Werkzeugteile den Hohlraum begrenzen, wobei vorzugsweise eines der beiden Werkzeugteile eine Öffnung zum Einfüllen der hohlen Strukturelemente aufweist..

6. Werkzeug nach Anspruch 5, **dadurch gekennzeichnet, dass** die beiden Werkzeugteil über eine Schraube miteinander verbunden sind, wobei die Schraube auf der Rotationsachse liegt und die Schraubenaußenfläche zumindest abschnittsweise den Hohlraum begrenzt.

7. Werkzeug nach einem der Ansprüche 1 bis 6, **dadurch gekennzeichnet, dass** die hohlen Strukturelemente den Hohlraum im wesentlichen vollständig ausfüllen.

8. Werkzeug nach einem der Ansprüche 1 bis 7, **dadurch gekennzeichnet, dass** die hohlen Strukturelemente innerhalb des Hohlraums durch Sintern, Verkleben oder durch eine aushärtende Substanz, wie z. B. Gießharz, miteinander verbunden sind.

9. Werkzeug nach einem der Ansprüche 2 bis 8, **dadurch gekennzeichnet, dass** der Hohlraum achsnah, d. h. innerhalb eines Bereiches der sich von der Rotationsachse radial um die Länge a nach außen erstreckt, wobei die Länge a < 0,8 *r, vorzugsweise < 0,65 * r, und am besten < 0,5* r ist, wobei r der halbe Werkzeugdurchmesser ist, angeordnet ist.

10. Werkzeug nach einem der Ansprüche 2 bis 9, **dadurch gekennzeichnet, dass** der Hohlraum entlang der Rotationsachse von dem Antriebsabschnitt in Richtung des Werkzeugabschnittes gestuft oder konisch ausgebildet ist, so dass die Querschnittsfläche senkrecht zur Rotationsachse des Hohlraumes an einer ersten axialen Position kleiner ist als an einer zweiten axialen Position, wobei die erste axiale Position näher am Schaftabschnitt angeordnet ist als die zweite Position.

## Claims

1. Tool for machining workpieces, with a tool body, **characterized in that** the tool body has a cavity in which there are received a plurality of hollow structural elements with a closed outer shell, within which at least one solid particle or a hollow body is arranged freely movable.

2. Tool according to claim 1, **characterized in that** the tool is a drilling or milling tool with an axis of rotation, and has a shaft portion, for connecting the tool to a drive, and a tool portion, which has a cutting edge for machining a workpiece or to which a cutting insert with such a cutting edge can be secured.

3. Tool according to claim 2, **characterized in that** the cavity has a 2-fold or multiple rotational symmetry in a section plane perpendicular to the axis of rotation, or **in that** several cavities, in which there are received a plurality of hollow structural elements with a closed outer shell, within which at least one solid particle or a hollow body is arranged freely movable, have a 2-fold or multiple rotational symmetry in a section plane perpendicular to the axis of rotation.

4. Tool according to claim 2 or 3, **characterized in that** the cavity is formed substantially annular.

5. Tool according to one of claims 1 to 4, **characterized in that** the tool is constructed in two parts, wherein the two tool parts delimit the cavity, wherein preferably one of the two tool parts has an opening for the hollow structural elements to be poured into.

6. Tool according to claim 5, **characterized in that** the two tool parts are connected to one another via a screw, wherein the screw lies on the axis of rotation and the screw outer face delimits the cavity, at least in sections.

7. Tool according to one of claims 1 to 6, **characterized in that** the hollow structural elements substantially completely fill the cavity.

8. Tool according to one of claims 1 to 7, **characterized in that** the hollow structural elements are connected to one another within the cavity by sintering, by adhesion or by a curing substance such as e.g. casting resin.

9. Tool according to one of claims 2 to 8, **characterized in that** the cavity is arranged close to the axis, i.e. within a region that extends radially outwards from the axis of rotation by the length a, wherein the length a < 0.8* r, preferably < 0.65* r, and ideally < 0.5* r, wherein r is half the tool diameter.

10. Tool according to one of claims 2 to 9, **characterized in that** the cavity is formed stepped or conical along the axis of rotation, from the drive portion in the direction of the tool portion, with the result that the cross-sectional surface area perpendicular to the axis of rotation of the cavity is smaller at a first axial position than at a second axial position, wherein the first axial position is arranged closer to the shaft portion than the second position.

## Revendications

1. Outil pour le travail de pièces avec formation de copeaux, comprenant un corps d'outil, **caractérisé en ce que** le corps d'outil comprend un espace creux dans lequel est reçu une pluralité d'éléments de structure creux ayant une coque extérieure fermée à l'intérieur de laquelle au moins une particule rigide ou un corps creux est disposé de façon librement mobile.

2. Outil selon la revendication 1, **caractérisé en ce que** l'outil est un outil de forage ou de fraisage avec un axe de rotation et comprend une partie de tige pour l'attachement de l'outil à un entraînement et une partie d'outil qui comporte une arête tranchante pour le travail d'une pièce avec formation de copeaux ou sur laquelle un insert de coupe avec une telle arête tranchante peut être fixé.

3. Outil selon la revendication 2, **caractérisé en ce que** l'espace creux comprend dans un plan de coupe perpendiculaire à l'axe de rotation une symétrie de rotation d'ordre n ou plus et **en ce que** plusieurs espaces creux dans lesquels sont reçus une pluralité d'éléments de structure creux ayant une coque extérieure fermée à l'intérieur de laquelle au moins une particule rigide ou un corps creux est disposé de façon librement mobile, comprennent dans un plan de coupe perpendiculaire à l'axe de rotation une symétrie de rotation d'ordre n ou plus.

4. Outil selon la revendication 2 ou 3, **caractérisé en ce que** l'espace creux présente une forme sensiblement annulaire.

5. Outil selon l'une des revendications 1 à 4, **caractérisé en ce que** l'outil est conçu avec deux parties, les deux parties délimitant l'espace creux, où de préférence l'une des deux parties comprend une ouverture pour l'introduction des éléments de structure creux.

6. Outil selon la revendication 5, **caractérisé en ce que** les deux parties d'outil sont attachées l'une à l'autre à l'aide d'une vis, la vis étant située sur l'axe de rotation et la surface extérieure de vis délimitant au moins partiellement l'espace creux.

7. Outil selon l'une des revendications 1 à 6, **caractérisé en ce que** les éléments de structure creux remplissent l'espace creux sensiblement entièrement.

8. Outil selon l'une des revendications 1 à 7, **caractérisé en ce que** les éléments de structure creux sont reliés les uns aux autres, à l'intérieur de l'espace creux, par frittage, collage ou par une substance durcissante telle que, par exemple, de la résine de coulée.

9. Outil selon l'une des revendications 2 à 8, **caractérisé en ce que** l'espace creux est disposé proche de l'axe, c'est-à-dire à l'intérieur d'une zone qui s'étend de l'axe de rotation radialement vers l'extérieur sur une longueur a, la longueur a étant inférieure à 0,8 * r, de préférence inférieure à 0,65 * r et le mieux inférieure à 0,5 * r, r étant la moitié du diamètre de l'outil.

10. Outil selon l'une des revendications 2 à 9, **caractérisé en ce que** l'espace creux est formé de manière étagée ou conique le long de l'axe de rotation par un segment d'entraînement en direction de la partie d'outil, si bien que la superficie de section transversale perpendiculaire à l'axe de rotation de l'espace creux est plus patite à une première position axiale qu'à une deuxième position axiale, 1 première position axiale étant disposée plus proche de la partie de tige que la deuxième position.
